# EUROPÄISCHE PATENTANMELDUNG

(11) **EP 4 674 248 A1**
(43) Veröffentlichungstag der Anmeldung: **07.01.2026**
(21) Anmeldenummer: 25183202.8
(22) Anmeldetag: 17.06.2025
(51) Int. Cl.: A01D 41/127, A01D 43/08

(54) **SELBSTFAHRENDER FELDHÄCKSLER**

(30) Priorität: 02.07.2024 DE 102024118781
(71) Anmelder: CLAAS Selbstfahrende Erntemaschinen GmbH, 33428 Harsewinkel (DE)
(72) Erfinder: Neitemeier, Dennis, 59510 Lippetal (DE); Belau, Sven Carsten, 33332 Gütersloh (DE); Bönig Dr., Ingo, 33330 Gütersloh (DE); Brune, Markus, 33428 Harsewinkel (DE); Titkemeier, Daniel, Osnabrück (DE); Dirksen, Matthis, Warendorf (DE)
(74) Vertreter: CLAAS Gruppe

(57) **Zusammenfassung**

Die vorliegende Erfindung betrifft einen selbstfahrenden Feldhäcksler (1), welcher ein höhenveränderbar an einer Einzugsvorrichtung (5) angeordnetes Vorsatzgerät (4) zur Aufnahme von Erntegut (2), Arbeitsaggregate (20) zur Bearbeitung des aufgenommenen Erntegutes (2), eine Überladevorrichtung (15) zur Abgabe des bearbeitenden Erntegutes(2) sowie ein Kamerasystem (16) zur Erfassung von Bildern (41) eines den Feldhäcksler (1) durchlaufenden Erntegutstromes (21) und eine Bildauswertungsvorrichtung (27) zur Auswertung der Bilder (41) sowie ein Fahrerassistenzsystem (17) zur Ansteuerung des Vorsatzgerätes (4), der Arbeitsaggregate (20) und der Überladevorrichtung (15) umfasst, wobei das Fahrerassistenzsystem (17) einen Speicher (40) zum Hinterlegen von Daten und eine Rechenvorrichtung (39) zur Verarbeitung der in dem Speicher (40) hinterlegten Daten aufweist, wobei die Bildauswertungsvorrichtung (27) zusammen mit dem Fahrerassistenzsystem (17), dem Vorsatzgerät (4) und den Arbeitsaggregaten (20) einen Einstellautomaten bildet, indem die Bildauswertungsvorrichtung (27) dazu eingerichtet ist, die Bilder (41) des Erntegutstroms (21) auf einen mit der Aufnahme des Erntegutes (2) durch das Vorsatzgerät (4) aufgenommenen, im Erntegutstrom (21) enthaltenen Anteil an, insbesondere anorganischen, Verunreinigungen fortlaufend mittels eines Maschinenlernalgorithmus zu analysieren und einen daraus abgeleiteten Verunreinigungsgrad (VG) an das Fahrerassistenzsystem (17) zu übermitteln, welches in Abhängigkeit vom Verunreinigungsgrad (VG) autonom fortlaufend eine Einstellung des Vorsatzgerätes (4) und/oder zumindest eines der Arbeitsaggregate (20) adaptiert.

## Beschreibung

Die vorliegende Erfindung betrifft einen selbstfahrenden Feldhäcksler gemäß dem Oberbegriff des Anspruches 1.

Aus der EP 4 052 560 A1 ist ein selbstfahrender Feldhäcksler, welcher ein höhenveränderbar an einer Einzugsvorrichtung angeordnetes Vorsatzgerät zur Aufnahme von Erntegut, Arbeitsaggregate zur Bearbeitung des aufgenommenen Erntegutes, eine Überladevorrichtung zur Abgabe des bearbeitenden Erntegutes sowie ein Kamerasystem zur Erfassung von Bildern eines den Feldhäcksler durchlaufenden Erntegutstromes und eine Bildauswertungsvorrichtung zur Auswertung der Bilder umfasst, bekannt. Mittels eines Kamerasystems werden Bilder eines den Feldhäcksler durchlaufenden Erntegutstromes aufgenommen und durch eine Bildauswertungsvorrichtung ausgewertet. Der Auswertung liegt die Bestimmung von Partikellängen mit einer Überlänge von in den Bildern enthalten Partikeln zugrunde. Basierend auf den detektierten Partikeln mit Überlänge wird durch eine Recheneinheit ein Betriebsparameter eines Arbeitsaggregates des Feldhäckslers eingestellt, um eine vorgegebene theoretische Schnittlänge des Erntegutes zu erreichen.

Mit der Aufnahme von Erntegut durch das Vorsatzgerät gelangen zusätzlich am Erntegut anhaftende Verunreinigungen, oder, bei zu geringem Abstand zum Boden, vom Vorsatzgerät selbst aufgenommene Verunreinigungen im den Feldhäcksler durchlaufenden Erntegutstrom. Der Grad an Verunreinigungen wirkt sich nachteilig auf die weitere Verwendung des bearbeiteten Erntegutes aus. So kann es bei einer Grünfutterernte durch enthaltene Verunreinigungen zur Fehlgärung der Silage oder zu Krankheiten bei den Tieren kommen, an welche das Grünfutter verfüttert wird. Damit geht zudem stets eine finanzielle Einbuße einher.

Ausgehend vom vorstehend genannten Stand der Technik liegt der Erfindung die Aufgabe zugrunde, einen selbstfahrenden Feldhäcksler bereitzustellen, welcher sich durch eine effizientere Ansteuerung von Vorsatzgerät und Arbeitsaggregaten auszeichnet, um die Aufnahme von Verunreinigungen zu vermeiden oder zumindest zu minimieren bzw. den Einfluss von aufgenommenen Verunreinigungen auf den Erntegutbearbeitungsprozess zu reduzieren.

Diese Aufgabe wird erfindungsgemäß durch einen selbstfahrenden Feldhäcksler mit den Merkmalen des Anspruches 1 gelöst. Vorteilhafte Weiterbildungen sind Gegenstand der abhängigen Ansprüche.

Gemäß dem Anspruch 1 wird ein selbstfahrender Feldhäcksler vorgeschlagen, welcher ein höhenveränderbar an einer Einzugsvorrichtung angeordnetes Vorsatzgerät zur Aufnahme von Erntegut, Arbeitsaggregate zur Bearbeitung des aufgenommenen Erntegutes, eine Überladevorrichtung zur Abgabe des bearbeitenden Erntegutes sowie ein Kamerasystem zur Erfassung von Bildern eines den Feldhäcksler durchlaufenden Erntegutstromes und eine Bildauswertungsvorrichtung zur Auswertung der Bilder sowie ein Fahrerassistenzsystem zur Ansteuerung des Vorsatzgerätes, der Arbeitsaggregate und der Überladevorrichtung umfasst, wobei das Fahrerassistenzsystem einen Speicher zum Hinterlegen von Daten und eine Rechenvorrichtung zur Verarbeitung der in dem Speicher hinterlegten Daten aufweist. Erfindungsgemäß ist vorgesehen, dass die Bildauswertungsvorrichtung zusammen mit dem Fahrerassistenzsystem, dem Vorsatzgerät und den Arbeitsaggregaten einen Einstellautomaten bildet, indem die Bildauswertungsvorrichtung dazu eingerichtet ist, die Bilder des Erntegutstroms auf einen mit der Aufnahme des Erntegutes durch das Vorsatzgerät aufgenommenen, im Erntegutstrom enthaltenen Anteil an, insbesondere anorganischen, Verunreinigungen fortlaufend mittels eines Maschinenlernalgorithmus zu analysieren und einen daraus abgeleiteten Verunreinigungsgrad an das Fahrerassistenzsystem zu übermitteln, welches in Abhängigkeit vom Verunreinigungsgrad autonom fortlaufend eine Einstellung des Vorsatzgerätes und/oder zumindest eines der Arbeitsaggregate adaptiert.

Die vorliegende Erfindung beruht auf dem Gedanken, dass, insbesondere anorganische, Verunreinigungen des Erntegutes unter anderem ihre Ursache in der Einstellung des Vorsatzgerätes am Feldhäcksler sowie in der Einstellung von das abzuerntende Feld zuvor bearbeitenden Arbeitsmaschinen haben kann, die in Vorbereitung und Durchführung des Ernteprozesses zum Einsatz kommen. Insbesondere kann es aufgrund von nicht optimal eingestellter Parameter des Vorsatzgerätes zu einem vermehrten Eintrag an anorganischen Verunreinigungen in das aufzunehmende Erntegut kommen.

Der erfindungsgemäße selbstfahrende Feldhäcksler ermöglicht es, den im Erntegutstrom enthaltenen Anteil an, insbesondere anorganischen, Verunreinigungen mittels des Maschinenlernalgorithmus im laufenden Erntebetrieb automatisch zu analysieren. Die beschriebene Erfindung stellt die Möglichkeit dar, kostengünstig einen Verunreinigungsgrad des Erntegutes zu qualifizieren und zu quantifizieren. Insbesondere kann die Analyse in Echtzeit durchgeführt werden. Insbesondere ist der Erntegutstrom ein Grünfuttererntegutstrom.

Der aus der Bildauswertungsvorrichtung zusammen mit dem Fahrerassistenzsystem, dem Vorsatzgerät und den Arbeitsaggregaten gebildete Einstellautomat ermöglicht es einem Bediener des Feldhäckslers, von dem Bediener getroffene Einstellungen für das Vorsatzgerät und/oder die Anbaugräte an den mittels des Maschinenlernalgorithmus bestimmten Verunreinigungsgrad des Erntegutes während des Erntevorgangs durch den Feldhäcksler autonom anzupassen.

Die von dem Fahrerassistenzsystem des Einstellautomaten angesteuerten Arbeitsaggregate können als die Einzugsvorrichtung, eine Häckselvorrichtung mit einer rotierend angetriebenen Häckseltrommel mit Häckselmessern und einer Gegenschneide zum Zerkleinern von Erntegut, als ein zwischen Gegenschneide und einem Auswurfkanal angeordneter, relativ zu der Häckseltrommel abstandsveränderlicher Trommelboden, als ein Nachbeschleuniger sowie als eine Siliermitteldosiervorrichtung ausgeführt sein.

Insbesondere kann die Bildauswertungsvorrichtung eine Recheneinheit und eine Speichereinheit umfassen, wobei mehrere Kontaminationsklassen in der Speichereinheit hinterlegt sind, die unterschiedliche Verunreinigungsgrade definieren, welche vom Massegehalt an anorganischen Verunreinigungen, insbesondere Sand, erdige Bestandteile wie Humus oder sonstige Bodenbestandteile, in der Trockenmasse des Erntegutes abhängig sind, wobei der Maschinenlernalgorithmus zumindest ein trainierbares neuronales Netzwerk zur Analyse der Bilder umfasst, wobei das zumindest eine neuronale Netzwerk als Basis ein EfficientNet, insbesondere EfficientNetB0, als Architektur und Skalierungsmethode für faltungsneuronale Netze verwendet. Neuronale Faltungsnetzwerke oder auch Convolutional Neural Network (CNN) wie das EfficientNet erzielen in der Bildverarbeitung besonders gute Ergebnisse. Das EfficientNet skaliert alle Dimensionen von Tiefe/Breite/Auflösung einheitlich mit einem zusammengesetzten Koeffizienten.

Im Gegensatz zur herkömmlichen Praxisbei der Verwendung eines neuronalen Faltungsnetzwerkes, bei der diese Faktoren willkürlich skaliert werden, skaliert die EfficientNet-Skalierungsmethode die Netzwerkbreite, -tiefe und -auflösung einheitlich mit einer Reihe fester Skalierungskoeffizienten. Die zusammengesetzte Skalierungsmethode ist durch die Intuition gerechtfertigt, dass das Netzwerk bei einem größeren Eingangsbild mehr Schichten benötigt, um das rezeptive Feld zu vergrößern, und mehr Kanäle, um mehr feinkörnige Muster auf dem größeren Bild zu erfassen.

Dabei wird bevorzugt zwischen fünf Verunreinigungsgraden unterschieden, die sich aus dem Verhältnis von Massegehalt, insbesondere anorganischer, Verunreinigungen zur Trockenmasse des Erntegutes ergeben. Insbesondere wird der Sandgehalt, der Anteil an erdigen Bestandteilen wie Humus und/oder ein sonstiger für Bodenmaterial repräsentativer Indikator als Verunreinigung im Erntegut bestimmt, um den Verunreinigungsgrad zu qualifizieren. Jedem Verunreinigungsgrad ist eine Kontaminationsklasse zugeordnet.

Zur Minimierung der Aufnahme von Verunreinigungen kann der Einstellautomat dazu eingerichtet sein, den Abstand des Vorsatzgerätes zum Feldboden und/oder den Auflagedruck auf den Feldboden anzupassen und/oder eine Quer- und/oder Längsanpassung des Vorsatzgerätes relativ zum Feldboden durchzuführen.

Alternativ oder zusätzlich kann zur Minimierung der Aufnahme von Verunreinigungen der Einstellautomat dazu eingerichtet sein, eine Antriebsdrehzahl zumindest einer gutfördernden Komponente des Vorsatzgerätes anzupassen. Die Art und Ausführung einer gutfördernden Komponente sind von der Ausführung des Vorsatzgerätes abhängig und können entsprechend variieren.

Der Minimierung der Aufnahme von Verunreinigungen mit dem Erntegut durch die Ansteuerung des Vorsatzgerätes durch den Einstellautomaten liegt zugrunde, durch die genannten Maßnahmen weniger Verunreinigungen mit dem Erntegut durch das Vorsatzgerät aufzunehmen.

Gemäß einer Weiterbildung kann der Einstellautomat dazu eingerichtet sein, als Reaktion auf mit Verunreinigungen kontaminiertes aufgenommenes Erntegut und in Abhängigkeit vom Verunreinigungsgrad eine auf das Erntegut ausgeübte Vorpresskraft von Vorpresswalzenpaaren der Einzugsvorrichtung anzupassen.

Alternativ oder zusätzlich kann der Einstellautomat dazu eingerichtet sein, als Reaktion auf mit Verunreinigungen aufgenommenes Erntegut und in Abhängigkeit vom Verunreinigungsgrad eine Schnittlänge der Häckselvorrichtung anzupassen.

Gemäß einer Weiterbildung kann der Einstellautomat dazu eingerichtet sein, als Reaktion auf mit Verunreinigungen kontaminiertes aufgenommenes Erntegut und in Abhängigkeit vom Verunreinigungsgrad einen Abstand des Trommelbodens zur Häckseltrommel und/oder einen Abstand des Nachbeschleunigers zur Wandung des Auswurfkanals anzupassen.

Alternativ oder zusätzlich kann der Einstellautomat dazu eingerichtet sein, eine Flüssigkeitsabgabe der Siliermitteldosiervorrichtung anzusteuern. Die Siliermitteldosiervorrichtung umfasst zumindest einen Tank, welcher auch nur mit Wasser befüllbar ist. Als Reaktion auf mit Verunreinigungen kontaminiertes aufgenommenes Erntegut und in Abhängigkeit vom Verunreinigungsgrad kann der Einstellautomat die Siliermitteldosiervorrichtung ansteuern, um Wasser in den Auswurfkanal einzuspritzen.

Der Ansteuerung der Arbeitsaggregate durch den Einstellautomaten als Reaktion auf mit Verunreinigungen kontaminiertes aufgenommenes Erntegut und in Abhängigkeit vom Verunreinigungsgrad liegt zugrunde, den Einfluss des durch Verunreinigungen kontaminierten aufgenommenen Erntegutes auf den Gutfluss möglichst gering zu halten. Der Gutfluss soll möglichst gleichmäßig und störungsfrei gehalten werden.

Gemäß einer bevorzugten Weiterbildung kann das zumindest eine neuronale Netzwerk zur Analyse der von dem Kamerasystem empfangenen Bilder einen direkten Algorithmus verwenden, welcher als Eingangsgröße die Bilder im Rohdatenformat verwendet, die direkt einer Klassifizierung durch das zumindest eine neuronale Netzwerk unterzogen werden und als Ausgangsgröße eine der Kontaminationsklassen bestimmt. Der von dem neuronalen Netzwerk verwendete direkte Algorithmus verarbeitet die Bilder des Kamerasystems unmittelbar, d.h. ohne eine Vorverarbeitung durch semantische Segmentierung, um die Klassifizierung durchzuführen, mit der als Ausgangsgröße eine der Kontaminationsklassen bestimmt wird.

Gemäß einer alternativen Weiterbildung kann das zumindest eine neuronale Netzwerk zur Analyse der von dem Kamerasystem empfangenen Bilder einen hybrider Algorithmus verwenden, welcher als Eingangsgröße die Bilder im Rohdatenformat verwendet, die einer semantischen Segmentierung durch das neuronale Netzwerk unterzogen werden und als Ausgangsgröße aus den pixelweise segmentierten Bildern extrahierte Merkmale einem zweiten neuronalen Netzwerk als Eingangsgrößen zuführt, welches aus den extrahierten Merkmalen als Ausgangsgröße eine der Kontaminationsklassen bestimmt.

Hierzu kann das neuronale zumindest eine Netzwerk die von dem Kamerasystem empfangenen Bilder pixelweise segmentieren, indem jedem Pixel eine Klasse zugewiesen wird, welche als eine in der Speichereinheit hinterlegte Eigenschaft definiert ist.

Dabei kann als eine Klasse die Eigenschaft "Boden" und als eine weitere Klasse die Eigenschaft "Erntegut" hinterlegt sein. Eine Reduktion auf nur zwei Eigenschaften vereinfacht den Vorgang der semantischen Segmentierung durch das zumindest eine neuronale Netzwerk.

Insbesondere können in der Speichereinheit hinterlegte extrahierte Merkmale aus der Gruppe Segmentierungsverhältnis, Anzahl von Polygonen, mittlere Polygongröße, Standardabweichung der Polygongrößenverteilung, kleinste Polygongröße und größte Polygongröße sein. Hierzu können in dem jeweils pixelweise segmentierten Bild vorhandenen Polygone, die segmentierte Pixel der Klasse "Boden" enthalten, mittels eines Konturensuch-Algorithmus bestimmt werden.

Bevorzugt kann das zweite neuronale Netzwerk ein neuronales Netz mit einem Input-Layer, einem Hidden-Layer und einem Output-Layer sein.

Insbesondere kann das zumindest eine neuronale Netzwerk für die Bestimmung der Kontaminationsklasse zumindest drei zeitlich aufeinanderfolgend empfangene Bilder des Erntegutstroms auswerten, wobei die Ausgabe der Ergebnisse als gewichteter Mittelwert erfolgt. Dadurch lässt sich, unabhängig davon, ob der direkte Algorithmus oder der hybride Algorithmus verwendet werden, ein statistisch robuster Ausgabewert generieren.

Des Weiteren kann eine Auswahl eines der zumindest drei zeitlich aufeinanderfolgenden Bilder des Erntegutstroms erfolgen, für welches die Kontaminationsklasse bestimmt werden soll, wobei das ausgewählte Bild bei der Mittelwertbildung eine höhere Gewichtung aufweist als die zumindest zwei weiteren Bilder. Dabei kann das ausgewählte Bild mit 40 % und die beiden anderen Bilder mit 30 % gewichtet werden. Vorzugsweise ist das ausgewählte Bild das zweite Bild, der drei in zeitlicher Abfolge nacheinander aufgenommenen Bilder.

Die vorliegende Erfindung wird nachstehend anhand eines in den Zeichnungen dargestellten Ausführungsbeispieles näher erläutert.

Es zeigen:
- Fig. 1: schematisch und exemplarisch einen Feldhäcksler;
- Fig. 2: schematisch und exemplarisch eine Struktur eines Einstellautomaten des Feldhäckslers;
- Fig. 3: exemplarisch eine schematische Darstellung einer Bildauswertungsvorrichtung;
- Fig. 4: exemplarisch eine schematische Darstellung einer Bildauswertungsvorrichtung gemäß einer alternativen Ausführung; und
- Fig. 5: exemplarisch ein mittels eines hybriden Algorithmus gemäß Fig. 4 durch ein neuronales Netzwerk segmentiertes Bild.

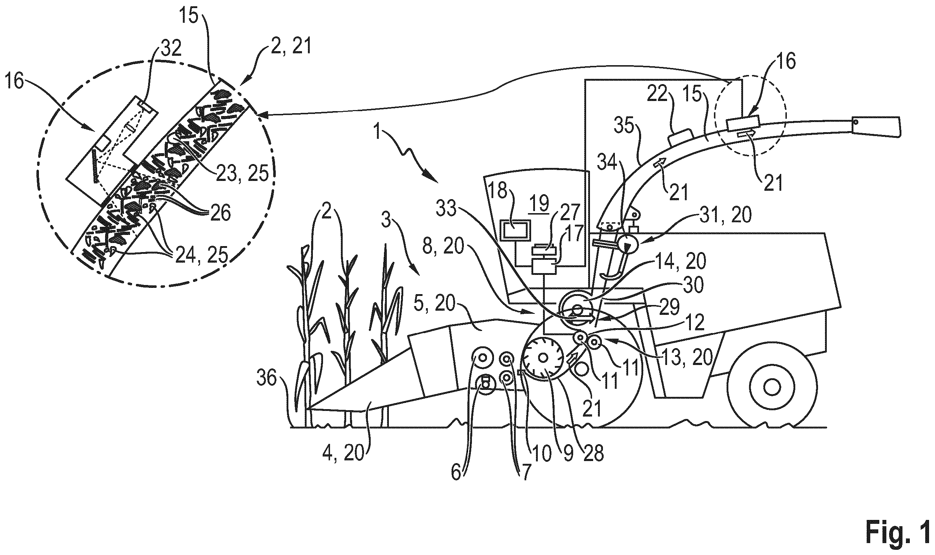

Fig. 1 zeigt schematisch und exemplarisch einen erfindungsgemäßen selbstfahrenden Feldhäcksler 1 beim Abernten und Aufnehmen eines Bestandes von Erntegut 2, beispielsweise Maispflanzen, Gras oder Ganzpflanzensilage als Grünfutter, auf einem Feld. Eine Aufnahmevorrichtung 3 des Feldhäckslers 1 umfasst in an sich bekannter Weise ein in Anpassung an das zu erntende bzw. aufzunehmende Erntegut 2 austauschbares Vorsatzgerät 4 und eine Einzugseinrichtung 5 mit mehreren Vorpresswalzenpaaren 6, 7, die das Erntegut 2 von dem Vorsatzgerät 4 übernimmt, um es einer Häckselvorrichtung 8 zuzuführen. Das aufgenommene Erntegut 2 durchläuft den Feldhäcksler 1 als - durch Pfeile veranschaulichter - Erntegutstrom 21.

Das Vorsatzgerät 4 kann beispielsweise als Maisgebiss ausgeführt sein, um stängeliges Erntegut 2 zu ernten oder als Pick-Up, welche auf dem Feld in Schwaden abgelegtes Erntegut 2, insbesondere Gras, aufnimmt. Das Vorsatzgerät 4 kann auch einen Mähbalken mit Einzugsschnecke aufweisen, um Gras in einem Arbeitsgang zu mähen und aufzunehmen.

Die Häckselvorrichtung 8 umfasst eine drehangetriebene Häckseltrommel 9, eine Gegenschneide 10, über welche das Erntegut 2 von dem benachbarten Vorpresswalzenpaar 7 der Einzugseinrichtung 5 hindurch geschoben werden, um durch Zusammenwirken der Gegenschneide 10 mit der Häckseltrommel 9 zerkleinert zu werden. Mittels einer Aktorik ist ein Abstand eines Trommelbodens 28, der die Häckseltrommel 9 in Umfangsrichtung abschnittsweise umgibt, verstellbar.

Der Häckselvorrichtung 8 ist eine optionale Nachzerkleinerungsvorrichtung 13, auch als Corn-Cracker bezeichnet, mit einem Paar von Konditionier- oder Crackerwalzen 11 nachgeordnet, die im Auswurfkanal 29 entnehmbar und/oder ausschwenkbar angeordnet ist. Die Konditionierwalzen 11 begrenzen einen Spalt 12 von verstellbarer Breite und rotieren mit unterschiedlichen Geschwindigkeiten, um in dem durch den Spalt 12 hindurchtretenden Erntegutstrom 21 enthaltene Körner zu zerkleinern.

Ein Nachbeschleuniger 14 verleiht dem zerkleinerten und in der optionalen Nachzerkleinerungsvorrichtung 13 konditionierten Erntegutstrom 21, die notwendige Geschwindigkeit, um eine als Auswurfkrümmer 15 ausgeführte Überladevorrichtung zu durchlaufen und in ein (nicht dargestelltes) Begleitfahrzeug übergeladen zu werden. Der Nachbeschleuniger 14 ist in einem zur gegenüberliegenden Wandung 30 des Auswurfkanals 29 veränderbaren Abstand angeordnet. Der Nachbeschleuniger 14 kann in horizontaler Richtung näher an die Wandung 30 heran oder von dieser weg bewegt werden, was durch einen Pfeil 33 veranschaulicht ist.

Dem Nachbeschleuniger 14 nachgeordnet kann eine Siliermitteldosiervorrichtung 31 angeordnet sein, die mittels einer ansteuerbaren Förderpumpe 34 mit veränderlichem Fördervolumen eine Flüssigkeit in den Auswurfkanal 29 einbringt.

Der Auswurfkrümmer 15 weist über seine Längserstreckung einen im Wesentlichen rechteckförmigen Querschnitt auf. Der Auswurfkrümmer 15 weist eine durchgehende geschlossene Oberseite 35 und eine abschnittsweise offen ausgeführte Unterseite auf. Orthogonal zur Oberseite 35 des Auswurfkrümmers 15 sind Seitenwände angeordnet, welche den durch den Auswurfkrümmer 15 hindurch geförderten Erntegutstrom 21 seitlich begrenzen und führen.

An dem Auswurfkrümmer 15 ist zumindest ein Kamerasystem 16 angeordnet, um Bilder 41 des durch den Auswurfkrümmer 15 hindurch geförderten Erntegutstroms 21 zu erzeugen. Weiterhin kann auf dem Auswurfkrümmer 15 ein NIR-Sensor 22 angeordnet sein. Mittels des NIR-Sensors 22 lassen sich Ernteguteigenschaften bestimmen. Der NIR-Sensor 22 ist hier und bevorzugt dem Kamerasystem 16 vorgeordnet auf der Oberseite 35 des Auswurfkrümmers 16 positioniert.

Das Vorsatzgerät 4, die Einzugsvorrichtung 5, die Häckselvorrichtung 8, die optionale Nachzerkleinerungsvorrichtung 13, der Nachbeschleuniger 14 sowie die Siliermitteldosiervorrichtung 31 und deren jeweilige Komponenten sind Arbeitsaggregate 20 des Feldhäckslers 1, die dem Abernten bzw. Aufnehmen des Erntegutes 2 eines Feldbestandes und/oder der Bearbeitung des Erntegutes 2 im Rahmen des Ernteprozesses dienen.

Der von den Arbeitsaggregaten 20 des Feldhäckslers 1 bearbeitete Erntegutstrom 21 weist in Abhängigkeit von der Erntegutart eine unterschiedliche Zusammensetzung auf. So sind bei Mais als Erntegutart im Wesentlichen ganze Körner 23 und zerkleinerte Körner 24 als Kornbestandteile 25 sowie Nicht-Kornbestandteile 26, wie Stängel, Blätter und dergleichen, im Erntegutstrom 21 enthalten. Bei der Erntegutart Gras enthält der Erntegutstrom 21 im Wesentlichen nur geschnittenes Gras als Erntegut 2.

Zusätzlich gelangen durch das Vorsatzgerät 4 mit dem aufgenommenen Erntegut 2 an dem Erntegut 2 anhaftende Verunreinigungen oder, bei zu geringem Abstand zum Feldboden 36, vom Vorsatzgerät 4 selbst aufgenommene Verunreinigungen in den Erntegutstrom 21, der den Feldhäcksler 1 durchläuft. An dem Erntegut 2 anhaftende Verunreinigungen können unter anderem auf einen vorangehenden Bearbeitungsprozess auf dem Feld zurückgehen. Beispielhaft hierfür sind im Fall der Grasernte das Mähen, Wenden sowie Schwaden zu nennen.

Das an dem Auswurfkrümmer 15 angeordnete zumindest eine Kamerasystem 16 weist zumindest eine Kamera 32 zur Aufnahme von Bildern 41 des im Erntegutstrom 21 enthaltenen Ernteguts 2 auf. Die Kamera 32 kann als eine Multispektralkamera ausgeführt sein, die Licht mit mindestens drei unterscheidbaren Wellenlängenbereichen aufnimmt.

Alternativ kann die Kamera 32 kann als Hyperspektralkamera ausgeführt sein. Insbesondere kann die Kamera 32 sichtbares Licht und infrarotes Licht, insbesondere nah-infrarotes Licht, aus unterschiedlichen Wellenlängenbereichen aufnehmen.

Die Bilder 41 werden im Rohdatenformat abgespeichert. Die zumindest eine Kamera 32 nimmt ortsaufgelöst Bilder 41 auf. Der Begriff "ortsaufgelöst" bedeutet hier, dass es mittels der Bildern 41 möglich ist, Einzelheiten des Ernteguts 2 sowie Verunreinigungen voneinander zu unterscheiden. Die Kamera 32 weist also zumindest genügend Pixel auf, um eine noch zu erläuternde Analyse der Bilder 41 durch die Bildauswertungsvorrichtung 27 zu ermöglichen. Das Kamerasystem 16 erfasst in einer Messroutine mittels der Kamera 32 mehrere Bilder 41 des Ernteguts 2 sowie der im Erntegutstrom 21 mitgeführten Verunreinigungen. Diese Messroutine wird entsprechend während des Betriebs des Feldhäckslers 1 durchgeführt.

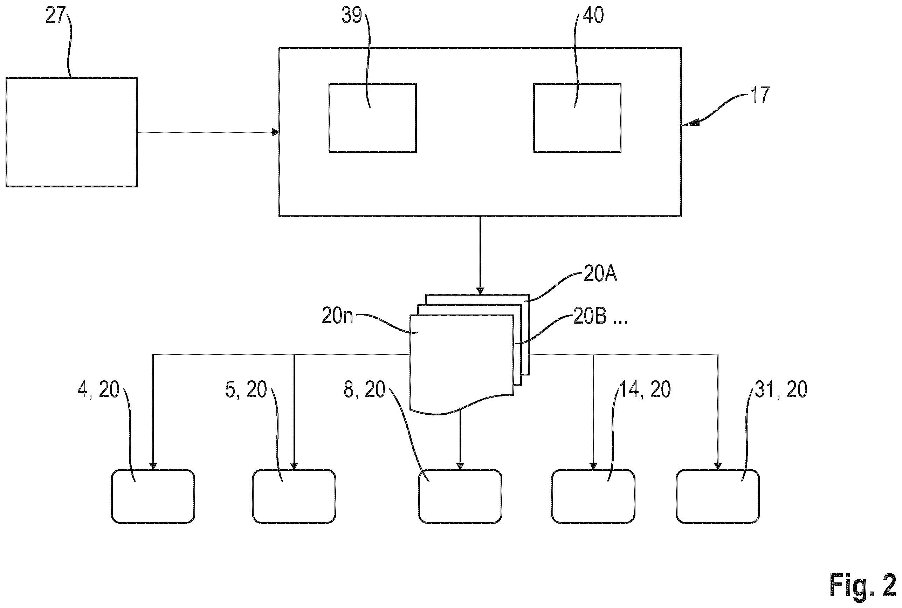

In Fig. 2 ist schematisch und exemplarisch eine Struktur eines Einstellautomaten des Feldhäckslers 1 dargestellt.

Die Bildauswertungsvorrichtung 27 ist mit einem Fahrerassistenzsystems 17 verbunden oder sie kann als Bestandteil des Fahrerassistenzsystems 17 ausgeführt sein. Das Fahrerassistenzsystem 17 kann mit einer Eingabe-Ausgabe-Einheit 18 in einer Fahrerkabine 19 des Feldhäckslers 1 verbunden sein, um Auswertungsergebnisse darauf auszugeben. Das Fahrerassistenzsystem 17 steuert zumindest ein Stellglied 20A, 20B, ... 20n zum Einstellen eines der Arbeitsaggregate 20 an. Das Fahrerassistenzsystems 17 umfasst eine Recheneinheit 39 und einen Speicher 40.

Die Bildauswertungsvorrichtung 27 ist dazu eingerichtet, die Bilder 41 des Erntegutstroms 21 auf einen mit der Aufnahme des Erntegutes 2 durch das Vorsatzgerät 4 aufgenommenen, im Erntegutstrom 21 enthaltenen Anteil an, insbesondere anorganischen, Verunreinigungen mittels eines Maschinenlernalgorithmus zu analysieren.

Die Bildauswertungsvorrichtung 27 umfasst eine Recheneinheit 37 und eine Speichereinheit 38. In der Speichereinheit 38 sind mehrere Kontaminationsklassen hinterlegt, die unterschiedliche Verunreinigungsgrade VG definieren, welche vom Massegehalt an, insbesondere anorganischen, Verunreinigungen in der Trockenmasse des Erntegutes 2 abhängig sind. Verunreinigungen, insbesondere anorganische Verunreinigungen, sind Sand, erdige Bestandteile wie Humus oder sonstige Bodenbestandteile.

Die Bildauswertungsvorrichtung 27 bildet zusammen mit dem Fahrerassistenzsystem 17, dem Vorsatzgerät 4 und den weiteren Arbeitsaggregaten 20 des Feldhäckslers 1 einen Einstellautomaten, indem die Bildauswertungsvorrichtung 27 dazu eingerichtet ist, die Bilder 41 des Erntegutstroms 21 auf einen mit der Aufnahme des Erntegutes 2 durch das Vorsatzgerät 4 aufgenommenen, im Erntegutstrom 21 enthaltenen Anteil an, insbesondere anorganischen, Verunreinigungen fortlaufend mittels des Maschinenlernalgorithmus zu analysieren und den daraus abgeleiteten Verunreinigungsgrad VG an das Fahrerassistenzsystem 17 zu übermitteln. Das Fahrerassistenzsystem 17 ist dazu eingerichtet, in Abhängigkeit vom bestimmten Verunreinigungsgrad VG autonom fortlaufend eine Einstellung des Vorsatzgerätes 4 und/oder zumindest eines der Arbeitsaggregate 20 zu adaptieren. Hierzu steuert das Fahrerassistenzsystem 17 eines oder mehrere der Stellglieder 20A, 20B, ... 20n an.

Stellglieder 20A, 20B, ... 20n der Arbeitsaggregate 20 können insbesondere Linearaktoren, sein, durch welche eine Position zumindest eines der Arbeitsaggregate 20 oder wenigstens eine Komponente des Arbeitsaggregate 20 und/oder eine auf zumindest eines der Arbeitsaggregate 20 oder wenigstens eine Komponente ausgeübte Kraft manipuliert wird. Stellglieder 20A, 20B, ... 20n können des Weiteren elektrische und/oder hydraulische Antriebsmotoren und/oder mechanische Antriebe sein, deren Antriebsdrehzahl und/oder Antriebsdrehmoment einstellbar ist, mit dem zumindest eines der Arbeitsaggregate 20 oder wenigstens eine Komponente des Arbeitsaggregate 20 angetrieben wird. Weitere Stellglieder 20A, 20B, ... 20n, die durch das Fahrerassistenzsystem 17 angesteuert werden, können Hydraulikpumpen, Flüssigkeitspumpen oder dergleichen sein.

In nachstehender Tabelle ist eine exemplarische Klassifizierung gemäß Resch et. al. 2013 "Bedeutung des Eisengehaltes als Indikator für die Futterverschmutzung von Grünlandfuttermitteln" wiedergegeben. Neben dem Gehalt an Eisen wird der in der Trockenmasse des Erntegutes 2 enthaltene Sandanteil als Indikator für die Futterverschmutzung angeführt. Weitere Indikatoren können erdige Bestandteile wie Humus oder sonstige Bodenbestandteile sein. Jedem Verunreinigungsgrad VG ist eine Kontaminationsklasse zugeordnet.

**Tabelle:**

| Kontaminationsklasse | Verunreinigungsgrad VG | Eisen [mg/kg TM] | Sandanteil [g/kg TM] |
|---|---|---|---|
| 1 | Sauber | Unter 400 | Unter 13 |
| 2 | Leicht | 400 bis 800 | 13 bis 19 |
| 3 | Mäßig | 800 bis 1500 | 19 bis 30 |
| 4 | Stark | 1500 bis 3000 | 30 bis 53 |
| 5 | Sehr stark | Über 3000 | Über 53 |

Der Maschinenlernalgorithmus umfasst zumindest ein trainierbares neuronales Netzwerk 42 zur Analyse der Bilder 41 des Erntegutstromes 21. Bevorzugt verwendet das zumindest eine neuronale Netzwerk 42 als Basis ein EfficientNet, insbesondere EfficientNetB0, als Architektur und Skalierungsmethode für faltungsneuronale Netze.

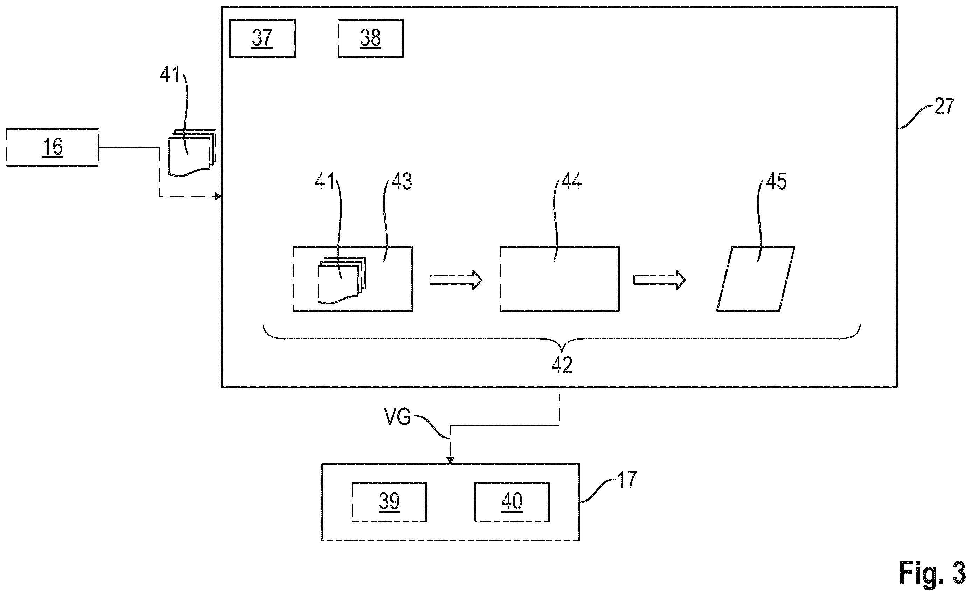

In Fig. 3 ist exemplarisch eine schematische Darstellung der Bildauswertungsvorrichtung 27 gezeigt. Gemäß der in Fig. 3 dargestellten Ausführungsform der Bildauswertungsvorrichtung 27 ist vorgesehen, dass das zumindest eine neuronale Netzwerk 42 zur Analyse der von dem Kamerasystem 16 empfangenen Bilder 41 einen direkten Algorithmus verwendet, welcher als Eingangsgröße 43 die Bilder 41 im Rohdatenformat verwendet, die direkt, d.h. ohne einen Zwischenschritt zur semantischen Segmentierung, in einem Klassifizierungsschritt 44 einer Klassifizierung durch das zumindest eine neuronale Netzwerk 42 unterzogen werden und als Ausgangsgröße 45 eine der in der Speichereinheit 38 hinterlegten Kontaminationsklassen bestimmt.

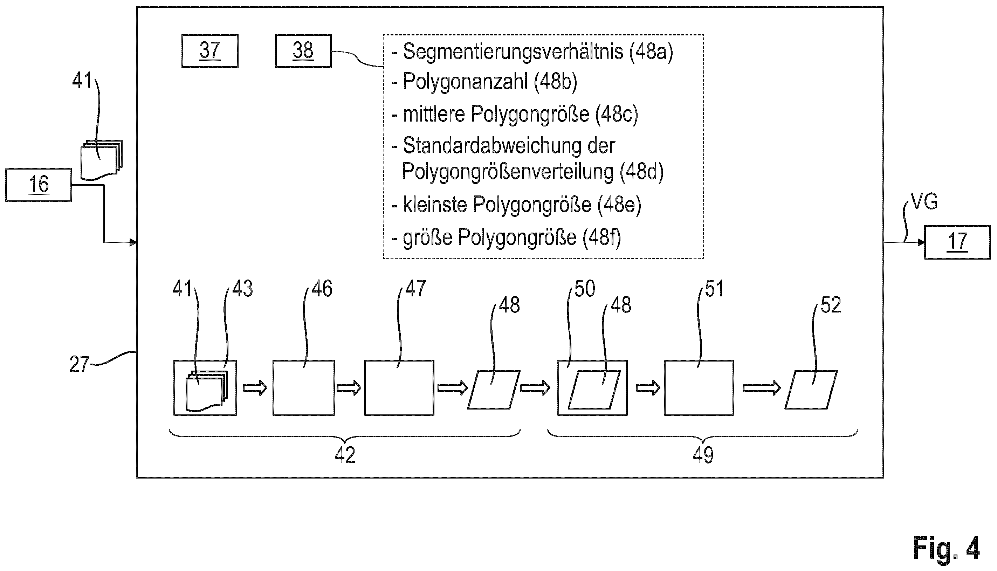

Die Darstellung in Fig. 4 zeigt exemplarisch eine schematische Darstellung der Bildauswertungsvorrichtung 27 gemäß einer alternativen Ausführung. Gemäß der alternativen Ausführung der Bildauswertungsvorrichtung 27 ist vorgesehen, dass das zumindest eine neuronale Netzwerk 42 zur Analyse der von dem Kamerasystem 16 empfangenen Bilder 41 einen hybrider Algorithmus verwendet, welcher als Eingangsgröße 43 die im Rohdatenformat empfangenen Bilder 41 verwendet, die einer semantischen Segmentierung durch ein Segmentierungsmodell 46 durch das neuronale Netzwerk 42 unterzogen werden und als Ausgangsgröße den pixelweise segmentierten Bildern 41a extrahierte Merkmale 48 generiert. Die als Ausgangsgrößen generierten Merkmale 48 des neuronalen Netzwerk 42 werden einem zweiten neuronalen Netzwerk 49 als Eingangsgrößen 50 zuführt, welches aus den extrahierten Merkmalen 48 in einem Klassifizierungsschritt 51 als Ausgangsgröße 52 eine der in der Speichereinheit 38 hinterlegten Kontaminationsklassen bestimmt.

Hierzu ist vorgesehen, dass das neuronale Netzwerk 42 die von dem Kamerasystem 16 empfangenen Bilder 41 pixelweise segmentiert, indem jedem Pixel 54 eine Klasse zugewiesen wird, welche als eine in der Speichereinheit 38 hinterlegte Eigenschaft definiert ist. Dabei kann als eine Klasse 55 die Eigenschaft "Boden" und als eine weitere Klasse 56 die Eigenschaft "Erntegut" hinterlegt sein.

In der Speichereinheit 38 hinterlegte extrahierte Merkmale 48 sind hier und vorzugsweise aus der Merkmalsgruppe Segmentierungsverhältnis 48a, Polygonanzahl 48b, mittlere Polygongröße 48c, Standardabweichung der Polygongrößenverteilung 48d, kleinste Polygongröße 48e und größte Polygongröße 48f. Die Polygone 53 werden dazu mittels eines Konturensuch-Algorithmus 47 bestimmt, der von dem neuronale Netzwerk 42 ausgeführt wird, um daraus die Merkmale 48 aus der vorstehend genannten Merkmalsgruppe zu extrahieren.

Das Merkmal 48 "Segmentierungsverhältnis 48a" beschreibt die Anzahl von als "Boden" klassifizierten Pixeln 55 im Verhältnis zur Gesamtanzahl an Pixeln 54 im pixelweise segmentierten Bild 41a. Das Merkmal 48 "Polygonanzahl 48b" beschreibt die Anzahl an als "Boden" klassifizierten Flächen. Das Merkmal 48 "mittlere Polygongröße 48c" beschreibt eine durchschnittliche Größe der Polynome 53. Das Merkmal 48 "kleinste Polygongröße 48e" gibt die Anzahl an Pixeln 54 der Klasse 55 des kleinsten bestimmten Polygons 53 wieder. Das Merkmal 48 "größte Polygongröße 48f" gibt die Anzahl an Pixeln 54 der Klasse 55 des größten bestimmten Polygons 53 wieder.

Bevorzugt kann das zweite neuronale Netzwerk 49 ein neuronales Netz mit einem Input-Layer, einem, insbesondere nur einem, Hidden-Layer und einem Output-Layer sein. Das zweite neuronale Netzwerk 49 kann für den auf die Klassifizierung beschränkten Vorgang als einfaches neuronales Netzwerk ausgeführt sein.

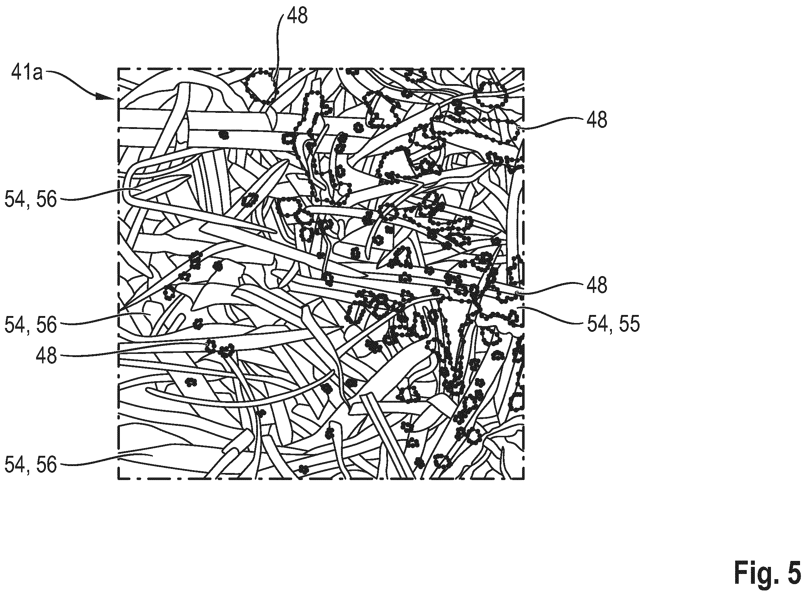

In Fig. 5 ist exemplarisch ein mittels des hybriden Algorithmus gemäß Fig. 4 durch das neuronale Netzwerk 42 segmentiertes Bild 41a dargestellt. Die im Rohdatenformat als Eingangsgröße 43 an das neuronale Netzwerk 42 übertragenen Bilder 41 werden durch das Segmentierungsmodell 46 pixelweise segmentiert. Jedem segmentierten Pixel 54 des Bildes 41a wird entweder die Klasse 55 mit der Eigenschaft "Boden" oder die weitere Klasse 56 mit der Eigenschaft "Erntegut" zugeordnet. In Fig. 5 umrandete Bereiche sind zusammenhängende Flächen von Pixeln 54, die der Klasse 55 mit der Eigenschaft "Boden" zugeordnet wurden. Mittels des Konturensuch-Algorithmus 47 werden auf Grundlage der zusammenhängenden Flächen von Pixeln 54, die der Klasse 55 mit der Eigenschaft "Boden" zugeordnet wurden, die Polygone 53 bestimmt. Aus den bestimmten Polygonen 53 werden die Merkmale 48 als Ausgangsgröße des neuronalen Netzwerkes 42 extrahiert.

Das zweite neuronale Netzwerk 49 verarbeitet die extrahierten Merkmale 48 als Eingangsgröße 50 in dem Klassifizierungsschritt 51 und bestimmt als Ausgangsgröße 52 eine der in der Speichereinheit 38 hinterlegten Kontaminationsklassen.

Das neuronale Netzwerk 42 ist dazu eingerichtet, für die Bestimmung der Kontaminationsklasse zumindest drei zeitlich aufeinanderfolgend empfangene Bilder 41 des Erntegutstroms 21 auszuwerten, wobei die Ausgabe der Ergebnisse als gewichteter Mittelwert erfolgt. Dadurch lässt sich, unabhängig davon, ob der direkte Algorithmus, welcher von dem neuronalen Netzwerk 42 alleine ausgeführt wird, oder der hybride Algorithmus, welcher von den beiden neuronalen Netzwerke 42 und 49 ausgeführt wird, verwendet wird, ein statistisch robuster Ausgabewert für die Ausgangsgröße 45 bzw. 52, d.h. die Zuordnung zu einer der in Tabelle 1 aufgeführten Kontaminationsklassen und damit zu einem der Verunreinigungsgrade VG, generieren.

Des Weiteren kann eine Auswahl eines der zumindest drei zeitlich aufeinanderfolgenden Bilder 41 des Erntegutstroms 221 erfolgen, für welches die Kontaminationsklasse als Ausgangsgröße 45 bzw. 52 bestimmt werden soll, wobei das ausgewählte Bild 41 bei der Mittelwertbildung eine höhere Gewichtung aufweist als die zumindest zwei weiteren Bilder 41. Dabei kann das ausgewählte Bild 41 mit 40% und die beiden anderen Bilder 41 können mit 30 % gewichtet werden. Vorzugsweise ist das ausgewählte Bild 41 das zweite Bild, der drei in zeitlicher Abfolge nacheinander aufgenommenen Bilder 41.

Der vorstehend beschriebene Feldhäcksler 1 ist zur Durchführung des Verfahren zur Analyse von Inhaltsstoffen im Erntegut 2 eingerichtet. Das Erntegut 2 wird von dem selbstfahrenden Feldhäcksler 1 mit dem Vorsatzgerät 4 aufgenommen, durch die Arbeitsaggregate 20 des Feldhäckslers 1 bearbeitet und durch die Überladevorrichtung 15 abgegeben. Es werden die Bilder 41 des den Feldhäcksler 1 durchlaufenden Erntegutstromes 21 durch das an der Überladevorrichtung 15 angeordnetes Kamerasystem 16 erfasst und durch die Bildauswertungsvorrichtung 27 ausgewertet. Der im Erntegutstrom 21 enthaltene Anteil an anorganischen Verunreinigungen wird mittels des Maschinenlernalgorithmus unter Verwendung eines direkten oder hybriden Algorithmus analysiert. Das Vorsatzgerät 4 und/oder die Arbeitsaggregate 20 des selbstfahrenden Feldhäckslers 1 werden in Abhängigkeit vom bestimmten Verunreinigungsgrad angesteuert. Hierfür kann vorzugsweise das Fahrerassistenzsystem 17 eingerichtet sein, welches die von der Bildauswertungsvorrichtung 27 generierten Ausgangsgrößen 45 bzw. 52 empfängt und daraus Steuersignale zur Ansteuerung ableitet.

Zur Minimierung der Aufnahme von Verunreinigungen durch das Vorsatzgerät 4 ist der Einstellautomat dazu eingerichtet, den Abstand des Vorsatzgerätes 4 zum Feldboden 36 und/oder den Auflagedruck auf den Feldboden 36 anzupassen und/oder eine Quer- und/oder Längsanpassung des Vorsatzgerätes 4 relativ zum Feldboden 36 durchzuführen.

Als weitere Maßnahme zur Minimierung der Aufnahme von Verunreinigungen kann der Einstellautomat dazu eingerichtet sein, eine Antriebsdrehzahl zumindest einer gutfördernden Komponente des Vorsatzgerätes 4 anzupassen. Der Minimierung der Aufnahme von Verunreinigungen mit dem Erntegut 2 durch die Ansteuerung des Vorsatzgerätes 4 durch den Einstellautomaten liegt zugrunde, durch die genannten Maßnahmen weniger Verunreinigungen mit dem Erntegut 2 durch das Vorsatzgerät 4 aufzunehmen.

Ein insbesondere ungeübter Bediener des Feldhäckslers 1 kann durch nicht angepasste Einstellungen des Vorsatzgerätes 4 ungewollt Bodenmaterial als Verunreinigungen mit dem Erntegut 2 aufnehmen. Diesem Umstand wird durch den aus der Bildauswertungsvorrichtung 27 zusammen mit dem Fahrerassistenzsystem 17, dem Vorsatzgerät 4 und den Arbeitsaggregaten 20 gebildeten Einstellautomaten begegnet.

Da das Erkennen von Verunreinigungen des Erntegutes 2 durch die Bedienperson des Feldhäckslers 1 durch einfache Inaugenscheinnahme in der Regel keine verlässliche Aussage über Art und Menge von Verunreinigungen zulässt, ermöglicht es der Einstellautomat durch die genannten Maßnahmen weniger Verunreinigungen mit dem Erntegut 2 durch das Vorsatzgerät 4 aufzunehmen. Beispielhaft ist das Aufnehmen von in Schwaden abgelegtem Erntegut 2 zu nennen. Der Verunreinigungsgrad VG wird unter anderem durch die vorangehenden Prozessschritte Mähen, Wenden und Schwaden beeinflusst. Während der Ausführung der vorangehenden Prozessschritte kann es bereits durch unsachgemäße Einstellung der hierfür erforderlichen Arbeitsmaschinen zu einer Verunreinigung des Erntegutes 2 kommen, bevor der Feldhäcksler 1 das Erntegut 2 aufnimmt.

Gemäß einer Weiterbildung kann der Einstellautomat dazu eingerichtet sein, als Reaktion auf mit Verunreinigungen kontaminiertes aufgenommenes Erntegut 2 und in Abhängigkeit vom bestimmten Verunreinigungsgrad VG eine auf das Erntegut 2 ausgeübte Vorpresskraft von Vorpresswalzenpaaren 6, 7 der Einzugsvorrichtung 5 anzupassen.

Eine weitere Maßnahme als Reaktion auf den bestimmten Verunreinigungsgrad VG kann der Einstellautomat dazu eingerichtet sein, eine Schnittlänge der Häckselvorrichtung 8 anzupassen.

Bevorzugt kann der Einstellautomat dazu eingerichtet sein, den Abstand des Trommelbodens 28 zur Häckseltrommel 9 und/oder einen Abstand des Nachbeschleunigers 14 zur Wandung 30 des Auswurfkanals 29 anzupassen.

Weiterhin kann der Einstellautomat dazu eingerichtet sein, eine Flüssigkeitsabgabe der Siliermitteldosiervorrichtung 31 anzusteuern. Die Siliermitteldosiervorrichtung 31 umfasst zumindest einen Tank, welcher auch nur mit Wasser befüllbar ist. Als Reaktion auf mit Verunreinigungen kontaminiertes aufgenommenes Erntegut 2 und in Abhängigkeit vom Verunreinigungsgrad VG kann der Einstellautomat die Siliermitteldosiervorrichtung 31 respektive die Förderpumpe 34 ansteuern, um Wasser in den Auswurfkanal 29 einzuspritzen.

Der Ansteuerung der Arbeitsaggregate 20 durch den Einstellautomaten erfolgt als Reaktion auf mit Verunreinigungen kontaminiertes aufgenommenes Erntegut. Die Ansteuerung der Arbeitsaggregate 20 durch den Einstellautomaten erfolgt dabei in Abhängigkeit vom Verunreinigungsgrad VG, um den Einfluss des durch Verunreinigungen kontaminierten aufgenommenen Erntegutes 2 auf den Gutfluss möglichst gering zu halten. Der Gutfluss soll möglichst gleichmäßig und störungsfrei gehalten werden.

**Bezugszeichenliste**

| | | | |
|---|---|---|---|
| 1 | Erntemaschine | 30 | Wandung |
| 2 | Erntegut | 31 | Siliermitteldosiervorrichtung |
| 3 | Aufnahmevorrichtung | 32 | Kamera |
| 4 | Vorsatzgerät | 33 | Pfeil |
| 5 | Einzugseinrichtung | 34 | Förderpumpe |
| 6 | Vorpresswalzenpaar | 35 | Oberseite |
| 7 | Vorpresswalzenpaar | 36 | Feldboden |
| 8 | Häckselvorrichtung | 37 | Recheneinheit |
| 9 | Häckseltrommel | 38 | Speichereinheit |
| 10 | Gegenschneide | 39 | Rechenvorrichtung |
| 11 | Crackerwalzen | 40 | Speicher |
| 12 | Spalt | 41 | Bilder |
| 13 | Nachzerkleinerungsvorrichtung | 41a | Segmentiertes Bild |
| 14 | Nachbeschleuniger | 42 | Neuronales Netzwerk |
| 15 | Auswurfkrümmer | 43 | Eingangsgröße |
| 16 | Kamerasystem | 44 | Klassifizierungsschritt |
| 17 | Fahrerassistenzsystem | 45 | Ausgangsgröße |
| 18 | Eingabe-Ausgabe-Einheit | 46 | Segmentierungsmodell |
| 19 | Fahrerkabine | 47 | Konturensuch-Algorithmus |
| 20 | Arbeitsaggregat | 48 | Merkmal |
| 20A | Stellglied | 48a | Segmentierungsverhältnis |
| 20A | Stellglied | 48b | Polygonanzahl |
| 20n | Stellglied | 48c | Mittlere Polygongröße |
| 21 | Erntegutstrom | 48d | Standardabweichung der Polygongrößenverteilung |
| 22 | NIR-Sensor | 48e | Kleinste Polygongröße |
| 23 | Körner | 48f | Größte Polygongröße |
| 24 | Zerkleinerte Körner | 49 | Zweites neuronales Netzwerk |
| 25 | Kornbestandteile | 50 | Eingangsgröße |
| 26 | Nicht-Kornbestandteile | 51 | Klassifizierungsschritt |
| 27 | Bildauswertungsvorrichtung | 52 | Ausgangsgröße |
| 28 | Trommelboden | 53 | Polygon |
| 29 | Auswurfkanal | 54 | Pixel |
| 55 | Klassifizierte Pixel | | |
| 56 | Klassifizierte Pixel | | |
| VG | Verunreinigungsgrad | | |

## Patentansprüche

1. Selbstfahrender Feldhäcksler (1), welcher ein höhenveränderbar an einer Einzugsvorrichtung (5) angeordnetes Vorsatzgerät (4) zur Aufnahme von Erntegut (2), Arbeitsaggregate (20) zur Bearbeitung des aufgenommenen Erntegutes (2), eine Überladevorrichtung (15) zur Abgabe des bearbeitenden Erntegutes(2) sowie ein Kamerasystem (16) zur Erfassung von Bildern (41) eines den Feldhäcksler (1) durchlaufenden Erntegutstromes (21) und eine Bildauswertungsvorrichtung (27) zur Auswertung der Bilder (41) sowie ein Fahrerassistenzsystem (17) zur Ansteuerung des Vorsatzgerätes (4), der Arbeitsaggregate (20) und der Überladevorrichtung (15) umfasst, wobei das Fahrerassistenzsystem (17) einen Speicher (40) zum Hinterlegen von Daten und eine Rechenvorrichtung (39) zur Verarbeitung der in dem Speicher (40) hinterlegten Daten aufweist, **dadurch gekennzeichnet, dass** die Bildauswertungsvorrichtung (27) zusammen mit dem Fahrerassistenzsystem (17), dem Vorsatzgerät (4) und den Arbeitsaggregaten (20) einen Einstellautomaten bildet, indem die Bildauswertungsvorrichtung (27) dazu eingerichtet ist, die Bilder (41) des Erntegutstroms (21) auf einen mit der Aufnahme des Erntegutes (2) durch das Vorsatzgerät (4) aufgenommenen, im Erntegutstrom (21) enthaltenen Anteil an, insbesondere anorganischen, Verunreinigungen fortlaufend mittels eines Maschinenlernalgorithmus zu analysieren und einen daraus abgeleiteten Verunreinigungsgrad (VG) an das Fahrerassistenzsystem (17) zu übermitteln, welches in Abhängigkeit vom Verunreinigungsgrad (VG) autonom fortlaufend eine Einstellung des Vorsatzgerätes (4) und/oder zumindest eines der Arbeitsaggregate (20) adaptiert.

2. Feldhäcksler (1) nach Anspruch 1, **dadurch gekennzeichnet, dass** die Arbeitsaggregate (20) als die Einzugsvorrichtung (5), eine Häckselvorrichtung (8) mit einer rotierend angetriebenen Häckseltrommel (9) mit Häckselmessern und einer Gegenschneide (10) zum Zerkleinern von Erntegut (2), als ein zwischen Gegenschneide (10) und einem Auswurfkanal (29) angeordneter, relativ zu der Häckseltrommel (9) abstandsveränderlicher Trommelboden (28), als ein Nachbeschleuniger (14) sowie als eine Siliermitteldosiervorrichtung (31) ausgeführt sind.

3. Feldhäcksler (1) nach Anspruch 1 oder 2, **dadurch gekennzeichnet, dass** die Bildauswertungsvorrichtung (27) eine Recheneinheit (37) und eine Speichereinheit (38) umfasst, wobei mehrere Kontaminationsklassen in der Speichereinheit (38) hinterlegt sind, die unterschiedliche Verunreinigungsgrade (VG) definieren, welche vom Massegehalt an anorganischen Verunreinigungen, insbesondere Eisen, Sand, erdigen Bestandteilen wie Humus oder sonstigen Bodenbestandteilen, in der Trockenmasse des Erntegutes abhängig sind, wobei der Maschinenlernalgorithmus zumindest ein trainierbares neuronales Netzwerk (42) zur Analyse der Bilder (41) umfasst, wobei das zumindest eine neuronale Netzwerk (42) als Basis ein EfficientNet, insbesondere EfficientNetB0, als Architektur und Skalierungsmethode für faltungsneuronale Netze verwendet.

4. Feldhäcksler (1) nach einem der vorangehenden Ansprüche, **dadurch gekennzeichnet, dass** der Einstellautomat dazu eingerichtet ist, den Abstand des Vorsatzgerätes (4) zum Feldboden (36) und/oder den Auflagedruck auf den Feldboden (36) anzupassen und/oder eine Quer- und/oder Längsanpassung des Vorsatzgerätes (4) relativ zum Feldboden (36) durchzuführen.

5. Feldhäcksler (1) nach einem der vorangehenden Ansprüche, **dadurch gekennzeichnet, dass** der Einstellautomat dazu eingerichtet ist, eine Antriebsdrehzahl zumindest einer gutfördernden Komponente des Vorsatzgerätes (4) anzupassen.

6. Feldhäcksler (1) nach Anspruch 2, **dadurch gekennzeichnet, dass** der Einstellautomat dazu eingerichtet ist, eine auf das Erntegut (2) ausgeübte Vorpresskraft von Vorpresswalzenpaaren (6, 7) der Einzugsvorrichtung (5) anzupassen.

7. Feldhäcksler (1) nach Anspruch 2 oder 5, **dadurch gekennzeichnet, dass** der Einstellautomat dazu eingerichtet ist, eine Schnittlänge der Häckselvorrichtung (8) anzupassen.

8. Feldhäcksler (1) nach Anspruch 2, 5 oder 6, **dadurch gekennzeichnet, dass** der Einstellautomat dazu eingerichtet ist, einen Abstand des Trommelbodens (28) zur Häckseltrommel (9) und/oder einen Abstand des Nachbeschleunigers (14) zur Wandung (30) des Auswurfkanals (29) anzupassen.

9. Feldhäcksler (1) nach Anspruch 2 oder 5 bis 7, **dadurch gekennzeichnet, dass** der Einstellautomat dazu eingerichtet ist, eine Flüssigkeitsabgabe der Siliermitteldosiervorrichtung (31) anzusteuern.

10. Feldhäcksler (1) nach Anspruch 3, **dadurch gekennzeichnet, dass** das zumindest eine neuronale Netzwerk (42) zur Analyse der von dem Kamerasystem (16) empfangenen Bilder (41) einen direkten Algorithmus verwendet, welcher als Eingangsgröße (43) die Bilder (41) im Rohdatenformat verwendet, die Bilder (41) direkt einer Klassifizierung durch das zumindest eine neuronale Netzwerk (42) unterzieht und als Ausgangsgröße (45) eine der Kontaminationsklassen bestimmt.

11. Feldhäcksler (1) nach Anspruch 3, **dadurch gekennzeichnet, dass** das zumindest eine neuronale Netzwerk (42) zur Analyse der von dem Kamerasystem (16) empfangenen Bilder (41) einen hybrider Algorithmus verwendet, welcher als Eingangsgröße (43) die Bilder (41) im Rohdatenformat verwendet, die Bilder (41) einer semantischen Segmentierung durch das neuronale Netzwerk (42) unterzieht und als Ausgangsgröße aus pixelweise segmentierten Bildern (41a) extrahierte Merkmale (48) einem zweiten neuronalen Netzwerk (49) als Eingangsgrößen (50) zuführt, welches aus den extrahierten Merkmalen (48) als Ausgangsgröße (52) eine der Kontaminationsklassen bestimmt.

12. Feldhäcksler (1) nach Anspruch 11, **dadurch gekennzeichnet, dass** das zumindest eine neuronale Netzwerk (42) die von dem Kamerasystem (16) empfangenen Bilder (41) pixelweise segmentiert, indem jedem Pixel (54) eine Klasse zugewiesen wird, welche als eine in der Speichereinheit (38) hinterlegte Eigenschaft definiert ist, wobei als eine Klasse die Eigenschaft "Boden" und als eine weitere Klasse die Eigenschaft "Erntegut" hinterlegt sind.

13. Feldhäcksler (1) nach Anspruch 11 oder 12 **dadurch gekennzeichnet, dass** in der Speichereinheit (38) hinterlegte extrahierte Merkmale (48) aus der Gruppe Segmentierungsverhältnis (48a), Polygonanzahl (48b), mittlere Polygongröße (48c), Standardabweichung der Polygongrößenverteilung (48d), kleinste Polygongröße (48e) und größte Polygongröße (48f) sind.

14. Feldhäcksler (1) nach Anspruch 11 bis 13, **dadurch gekennzeichnet, dass** das zweite neuronale Netzwerk (49) ein neuronales Netz mit einem Input-Layer, einem Hidden-Layer und einem Output-Layer ist.

15. Feldhäcksler (1) nach einem der Ansprüche 10 bis 14, **dadurch gekennzeichnet, dass** das zumindest eine neuronale Netzwerk (42, 49) für die Bestimmung der Kontaminationsklasse zumindest drei zeitlich aufeinanderfolgend empfangene Bilder (41) des Erntegutstroms (21) auswertet, wobei die Ausgabe der Ergebnisse als gewichteter Mittelwert erfolgt, wobei eine Auswahl eines der zumindest drei zeitlich aufeinanderfolgenden Bilder (41) des Erntegutstroms (21) erfolgt, für welches die Kontaminationsklasse bestimmt werden soll, wobei das ausgewählte Bild (41) bei der Mittelwertbildung eine höhere Gewichtung aufweist als die zumindest zwei weiteren Bilder (41).
